# EUROPÄISCHE PATENTSCHRIFT

(11) **EP 1 037 128 B1**
(45) Veröffentlichungstag und Bekanntmachung des Hinweises auf die Patenterteilung: **18.12.2002**
(21) Anmeldenummer: 00104659.8
(22) Anmeldetag: 03.03.2000
(51) Int. Cl.: G05B 23/02, G06F 3/00

(54) **System und Verfahren zur Prozessführung und -überwachung einer technischen Anlage**
System and method for conducting and monitoring a process of a technical installation
Système et méthode pour conduire et surveiller un processus d'une installation technique

(30) Priorität: 08.03.1999 DE 19910058
(43) Veröffentlichungstag der Anmeldung: 20.09.2000
(73) Patentinhaber: SIEMENS AKTIENGESELLSCHAFT, 80333 München (DE)
(72) Erfinder: Bindel, Thomas, Dr., 04318 Leipzig (DE)

(56) Entgegenhaltungen:
- WO-A-92/09984
- DE-A- 3 624 025
- US-A- 5 588 109

## Beschreibung

Die Erfindung betrifft ein System und Verfahren zur Prozeßführung und -überwachung einer technischen Anlage, insbesondere einer Kraftwerksanlage.

Als Stand der Technik wird die Druckschrift US 5,588,109 genannt, aus der ein virtueller Wahrnehmungsraum für die Prozeßüberwachung bekannt ist.

Für den Betrieb einer technischen Anlage, insbesondere einer Kraftwerksanlage, ist eine zuverlässige Eingabe von Informationen oder Daten durch das Bedienpersonal in ein als Datenverarbeitungseinheit ausgeführtes Steuer- und Informationssytem der technischen Anlage erforderlich. Üblicherweise erfolgt eine derartige Dateneingabe über eine Tastatur oder Maus, unterstützt durch einen Bildschirm eines Computers, in. einer Leitwarte zur Steuerung der Kraftwerksanlage. Aufgrund der eingeschränkten Wiedergabemöglichkeiten der großen Menge von Daten in der Leitwarte, beispielsweise durch die begrenzte Anzahl von Bildschirmen, werden üblicherweise Kennzeichnungssysteme oder schematische Darstellungen für die Beschreibung der Daten verwendet. Dabei werden eine Vielzahl von in der Anlage generierten Daten durch ein entsprechendes Symbol oder Kennzeichen verdichtet dargestellt. Somit entspricht die Wiedergabe der Daten nicht der Realität, d.h. dem Aufbau der Anlage, und erfordert daher vom Bedienpersonal eine besonders sichere Kenntnis der verwendeten Symbole und Kennzeichen. Bei der auch als Mensch-Maschine-Schnittstelle bezeichneten Leitwarte nimmt mit zunehmender Komplexität der Anlage und somit zunehmender Menge an zu verarbeitenden Daten die Zuverlässigkeit der Wahrnehmung von auftretenden Problemen oder Störungen durch das Bedienpersonal ab.

Beispielsweise werden die Aktionen für die Eingabe der Daten in der Leitwarte via Tastatur, Maus oder am Bildschirm selbst, z.B. Touch Screen, vorgenommen. Zur Wiedergabe des Prozeßzustandes der Anlage in schematischer Darstellung wird als Wahrnehmungsraum beispielsweise auf einem Bildschirm ein Bild dargestellt. Insbesondere bei einem Störfall fallen in der Leitwarte zur Steuerung der Anlage ständig große Mengen verschiedener Daten, z.B. Meßwerte oder Meldesignale, an, die in ihrer Gesamtheit den Anlagen- oder Betriebszustand beschreiben. Das Bedienpersonal steht dann vor der Aufgabe, die für den Betriebszustand jeweils relevanten Daten zu identifizieren und ihre Werte in bezug auf den Zustand der Anlage zu verfolgen, zu analysieren und zu interpretieren. Demzufolge ist eine Analyse des Störfalls mit einem hohen Aufwand und zudem mit hohen Anforderungen an den Benutzer hinsichtlich eines enormen Zeitdrucks verbunden, da häufig kurzfristig Entscheidungen zur Einleitung von Gegenmaßnahmen getroffen werden müssen. Dies führt dazu, daß der Wahrnehmungsraum - "Bildschirm" - sowie der Aktionsraum - Tastatur, Maus, Touch Screen - als hinderlich empfunden werden. Die Mensch-Maschine-Schnittstelle wird somit zur Schwachstelle in der rechnergestützten Problemlösung.

Entsprechend sind weitere Darstellungs- und Eingabemöglichkeiten für Daten im Hinblick auf eine Verbesserung der Mensch-Maschine-Schnittstelle entwickelt worden. Beispielsweise ist es bekannt, ausgegebene Daten, d.h. den Bildschirminhalt, an eine Wandfläche zu projizieren, wodurch eine besonders große Bildfläche ermöglicht ist. Durch einen Laserstrahl in der Art eines Touch Screens bestimmte Felder werden im projizierten Bild markiert, durch eine Kamera erkannt und durch einen Rechner verwertet. Nachteilig dabei ist, daß die Eingabemöglichkeiten sehr beschränkt sind. Eine weitere Möglichkeit ist aus der deutschen Patentanmeldung DE 4446353.7 bekannt, bei der sprachlich eingegebene Informationen eines Benutzers in maschinenlesbare Daten umgewandelt werden. Nachteilig ist bei dieser Art von Dateneingabe, daß der Wahrnehmungsraum und der Aktionsraum zusammenfallen und somit der Wahrnehmungsraum begrenzt ist auf die auf dem Bildschirm dargestellten Bereiche, so daß die Anordnung es nicht erlaubt die komplizierte Kraftwerksanlage vollständig zu analysieren und insbesondere sich in dieser zu bewegen.

Der Erfindung liegt daher die Aufgabe zugrunde, ein System zur Prozeßführung und -überwachung einer technischen Anlage anzugeben, bei dem die Mensch-Maschine-Schittstelle derart verbessert ist, daß ein Teilsystem der technischen Anlage als Wahrnehmungsraum für den Menschen visuell darstellbar ist. Darüber hinaus soll ein Verfahren zum Betrieb eines Systems zur Prozeßführung und -überwachung angegeben werden.

Bezüglich des Systems zur Prozeßführung und -überwachung der technischen Anlage wird diese Aufgabe erfindungsgemäß gelöst durch die Merkmale des Anspruchs 1. Vorteilhafte Ausführungen sind Bestandteil der Unteransprüche. Das System zur Prozeßführung und -überwachung umfaßt eine Speichereinheit, eine Datenverarbeitungseinheit und ein Mittel zur Erzeugung eines virtuellen Wahrnehmungsraums sowie zur Generierung von Eingabedaten für die Datenverarbeitungseinheit durch Aktionen eines Benutzers im Wahrnehmungsraum. Dabei ist als Mittel zur Erzeugung und Generierung von Eingabedaten ein an die Blickrichtung und/oder Kopfbewegung gekoppeltes Visualisierungsgerät, ein an die Hand- und/oder Fingerbewegung gekoppeltes erstes Eingabegerät, ein an die Körperbewegung gekoppeltes zweites Eingabegerät und/oder ein an die Fußbewegung gekoppeltes drittes Eingabegerät vorgesehen.

Zweckmäßigerweise ist das Mittel zur Erzeugung und Generierung von Eingabedaten jeweils mittels eines zugehörigen Datenübertragungssystems mit der Datenverarbeitungseinheit verbunden. Hierdurch sind die vom Benutzer über die Eingabegeräte und/oder das Visualisierungsgerät ausgeführten Aktionen automatisch als Eingabedaten der Datenverarbeitungsanlage zuführbar.

Die Datenverarbeitungseinheit weist vorteilhafterweise einen Analysebaustein zur Auswahl eines Teilbildes aus einem als architektonisches Modell der technischen Anlage hinterlegten Gesamtbild auf. Dabei ist in dem architektonischen Modell der Aufbau der technischen Anlage in Form einer Vielzahl von mehrdimensionalen Bildern, insbesondere 3D-Grafiken, die jeweils Teilsysteme oder Komponenten der technischen Anlage darstellen, hinterlegt.

Zweckmäßigerweise erfolgt die Auswahl des Teilbildes anhand der räumlichen Position des Benutzers und/oder anhand der Gestik des Benutzers und/oder anhand der Blickrichtung des Benutzers und/oder anhand der Bewegung des Benutzers. Befindet sich der Benutzer beispielsweise im Wahrnehmungsraum in dem Teilbild "Dampferzeuger" unmittelbar vor dem Dampferzeuger, so wandert das Teilbild durch eine Hand-, Fuß- oder Kopfbewegung des Benutzers in Richtung der ausgeübten Bewegung, wodurch ein neues Teilbild für das angezeigte Objekt, für die neue Position bzw. für die neue Blickrichtung des Benutzers mittels des nachfolgend beschriebenen Visualisierungsgerätes dargestellt wird.

In vorteilhafter Ausgestaltung umfaßt das Visualisierungsgerät eine Anzahl von Projektoren und/oder eine Anzahl von Detektoren zur Wiedergabe des Teilbilds in räumlicher Form bzw. zur Detektion der räumlichen Position des Benutzers im virtuellen Wahrnehmungsraum. Dabei ist mittels des Teilbilds gemäß der Position und/oder der Blickrichtung des Benutzers der entsprechende virtuelle Wahrnehmungsraum dargestellt. Als Visualisierungsgerät dient beispielsweise ein Helm oder eine Brille, welche/r sowohl Detektoren zur Detektion der Kopfund/oder Augenbewegung des Benutzers als auch Projektoren, insbesondere Front-eye-Monitore, zur Visualisierung des Wahrnehmungsraums, d.h. zur Ausgabe des Teilbilds, aufweisen.

In vorteilhafter Ausgestaltung umfassen das erste Eingabegerät, das zweite Eingabegerät und/oder das dritte Eingabegerät jeweils eine Anzahl von zugehörigen Detektoren zur Detektion der räumlichen Position des Benutzers im virtuellen Wahrnehmungsraum. Als erstes Eingabegerät ist beispielsweise ein Handschuh vorgesehen, der zur Detektion der Hand- und/oder Fingerbewegung des Benutzers entsprechende Sensoren aufweist. Das zweite Eingabegerät ist beispielsweise eine Weste oder Jacke, die eine Anzahl von über die gesamte Oberfläche angeordneten Sensoren zur Detektion der Körperbewegung des Benutzers umfaßt. Zur Detektion der Fußbewegung des Benutzers ist als drittes Eingabegerät z.B. eine Fußmatte oder ein Schuh, welche entsprechende Sensoren aufweisen, vorgesehen.

Die zweitgenannte Aufgabe wird erfindungsgemäß gelöst, indem mittels eines Visualisierungsgeräts ein räumliches Bild erzeugt wird, welches die räumliche Position eines Benutzers in einem virtuellen Wahrnehmungsraum darstellt, wobei durch Eingabe von Bewegungen des Benutzers dessen räumliche Position im Wahrnehmungsraum ermittelt und an die ausgeführten Bewegungen angepaßt wird, und bei dem entsprechend der ausgeführten Bewegungen und der neu ermittelten Position das Bild bewegt bzw. der entsprechende Wahrnehmungsraum dargestellt wird.

Die mit der Erfindung erzielten Vorteile bestehen insbesondere darin, daß durch ein derartiges System, das sowohl ein Eingabegerät als auch ein Visualisierungsgerät umfaßt, der Wahrnehmungsraum zugleich auch Aktionsraum ist, in dem darin der Benutzer durch physische Handlungen als Bestandteil des Wahrnehmungsraumes und des Aktionsraumes arbeitet. Dies ermöglicht in besonders einfacher Weise, daß der Benutzer sich durch die reale Anlage im virtuellen Wahrnehmungsraum bewegt. Hierdurch ist der Benutzer in der Lage durch entsprechende farbliche Ausgestaltung der dargestellten Komponenten im Wahrnehmungsraum, Störungen besonders einfach und schnell ohne Verschlüsselung zu erkennen und durch entsprechende Aktionen, wie z.B. Däteneingabe, zu beheben.

Ein Ausführungsbeispiel wird anhand einer Zeichnung näher erläutert.

Diese zeigt ein System 1 zur Prozeßführung und Überwachung einer nicht näher dargestellten technischen Anlage, z.B. einer Kraftwerksanlage. Das System 1 umfaßt eine Speichereinheit 2 zur Archivierung von prozeßrelevanten Daten D der Kraftwerksanlage. Die prozeßrelevanten Daten D werden der Speichereinheit 2 von einer nicht dargestellten Automatisierungseinheit zugeführt. Das System umfaßt darüber hinaus eine Datenverarbeitungseinheit 4. Die Datenverarbeitungseinheit 4 umfaßt zur Verarbeitung der prozeßrelevanten Daten D einen Analysebaustein 6. Die Datenverarbeitungseinheit 4 umfaßt ferner zur Kopplung des Analysebausteins 6 mit einem Mittel 10 zur Erzeugung eines virtuellen Wahrnehmungsraums sowie zur Generierung von Eingabedaten für die Datenverarbeitungseinheit 4 eine Kopplungseinheit 8. Das Mittel 10 zur Erzeugung und zur Generierung ist über eine Leitung 12 mit der Kopplungseinheit 8 verbunden.

Das Mittel 10 zur Erzeugung und Generierung von Eingabedaten umfaßt ein Visualisierungsgerät 14, ein erstes Eingabegerät 16, ein zweites Eingabegerät 18 und ein drittes Eingabegerät 20. Das Mittel 10 zur Erzeugung des virtuellen Wahrnehmungsraums sowie zur Generierung der Eingabedaten für die Datenverarbeitungseinheit 4 dient als sogenannte Mensch-Maschine-Schnittstelle, bei der das Bedienpersonal oder der Benutzer mittels Aktionen Eingabedaten generieren und wahrnehmen kann. Dazu dient dem Benutzer als Visualisierungsgerät 14 eine Brille oder ein Helm, welcher an die Blickrichtung und/oder an die Kopfbewegung des Benutzers gekoppelt ist. Das Visualisierungsgerät 14 umfaßt zur Wiedergabe des virtuellen Wahrnehmungsraums, insbesondere zur Wiedergabe eines Teilbilds in räumlicher Form, eine Anzahl von Projektoren 14A, z.B. Front-eye-Monitore. Zur Detektion der räumlichen Position des Bedienpersonals im virtuellen Wahrnehmungsraum umfaßt das Visualisierungsgerät 14 eine Anzahl von Detektoren 14B, z.B. zur Ermittlung der Position einen Helm oder zur Ermittlung der Blickrichtung des Benutzers eine Kamera. Alternativ kann aber auch ein Mikrofonarray, ein Headtracker oder ein Eye-Tracker verwendet werden. Sowohl die Projektoren 14A als auch die Detektoren 14B des Visualisierungsgeräts 14 sind über die Leitung 12 mit der Kopplungseinheit 8 verbunden. Als Leitung 12 kann beispielsweise eine Funkverbindung oder ein anderes Datenübertragungsmittel vorgesehen sein.

Das erste Eingabegerät 16 ist an die Hand- und/oder Fingerbewegung des Benutzers gekoppelt. Zur Detektion der Handund/oder Fingerbewegung umfaßt das erste Eingabegerät eine Anzahl von zugehörigen Detektoren 16A, die beispielsweise über die gesamte Oberfläche eines Handschuhs angeordnet sind. Das erste Eingabegerät 16 ist mit den zugehörigen Detektoren 16A über die Leitung 12 mit der Kopplungseinheit 8 verbunden.

Das zweite Eingabegerät 18 ist vorzugsweise eine mit einer Anzahl von Detektoren 18A bestückte Datenweste oder Datenhose. Die dem zweiten Eingabegerät 18 zugehörigen Detektoren 18A dienen insbesondere der Identifizierung und Detektion der Körperbewegung, der Gestik sowie der Position des Bedieners. Das zweite Eingabegerät 18 ist ebenfalls über die Leitung 12 mit der Kopplungseinheit 8 zum Datenaustausch verbunden.

Als drittes Eingabegerät 20 dient eine mit einer Anzahl von zugehörigen Detektoren 20A bestückte Fußmatte oder Schuhe. Somit werden über die Detektoren 20A Fußbewegungen oder Laufbewegungen detektiert. Die dabei erfaßten Daten werden dem Analysebaustein 6 über die Leitung 12 zugeführt.

In dem Analysebaustein 6, dem die Daten über die Kopplungseinheit 8 zugeführt werden, ist ein in mehrere Teilbilder TBi, mit i=1,...,n, gegliedertes architektonisches Modell der Kraftwerksanlage hinterlegt. Dabei bildet das architektonische Modell ein Gesamtbild der Kraftwerksanlage. Die Teilbilder TBi stellen anhand von mehrdimensionalen Grafikobjekten beispielsweise eine einzelne technische Komponente oder ein System der Kraftwerksanlage, insbesondere einen Motor bzw. einen Dampferzeuger, dar. Vorzugsweise sind die Teilbilder TBi als sogenannte CAD-Modelle hinterlegt. Die als einzelne Grafikobjekte dargestellten Systeme oder Komponenten können je nach Position des Benutzers in allen Ansichten, z.B. in der Drauf- oder Seitensicht ausgegeben werden. Darüber hinaus ist es durch entsprechende Eingaben des Benutzers möglich, die einzelnen Komponenten auch zu durchleuchten, d.h. im Querschnitt zu betrachten.

Im Betrieb des Systems 1 werden mittels des Visualisierungsgeräts 14 und der Eingabegeräte 16, 18 und 20 die Blickrichtung, die Position sowie eine Vorgabe des Benutzers B erfaßt und in einen die Blickrichtung, die Position und die Vorgabe beschreibenden Satz von Eingabedaten E umgewandelt. Die Eingabedaten E werden über die Leitung 12 und die Kopplungseinheit 8 dem Analysebaustein 6 zugeführt. Anhand der Eingabedaten E wird im Analysebaustein 6 die vom Benutzer B beispielsweise angeblickte Komponente ermittelt. D.h. die zu bedienende und der Blickrichtung zugeordnete Komponente der Kraftwerksanlage wird anhand einer Aktion des Benutzers B identifiziert. Ein diesem Teilsystem oder dieser Komponente zugrundeliegendes Teilbild TBi wird vom Analysebaustein **6** aus der Gesamtheit aller Teilbilder TBi des im Analysebaustein 6 hinterlegten architektonischen Modells ausgewählt. Das ausgewählte Teilbild TBi wird vom Analysebaustein 6 der Kopplungseinheit 8 und über die Datenleitung 12 dem Projektor 14A des Visualisierungsgeräts 14 zur Ausgabe zugeführt. Alternativ kann das ausgewählte Teilbild TBi auch einem nicht näher dargestellten Bildschirm einer Leitwarte zur Ausgabe zugeführt werden.

Durch die Ausgabe des Teilbilds TBi auf dem Projektor 14A wird der Benutzer B in die Lage versetzt, als ob er sich in der wahren Anlage, insbesondere vor dem angewählten System oder der angewählten Komponente, befindet. Dieser durch das Teilbild TBi dargestellte virtuelle Wahrnehmungsraum wird in Abhängigkeit von der Eingabe des Benutzers B durch dessen Bewegung ständig aktualisiert. D. h. mit jeder Bewegung des Benutzers B, sei es eine Fuß-, eine Hand- und/oder Fingerbewegung wandert der Benutzer im virtuellen Wahrnehmungsraum in die entsprechende Richtung. Dazu wird jeweils das zugehörige Teilbild TBi des Analysebausteins 6 an die Projektoren 14A übermittelt. Darüber hinaus kann der Benutzer B durch seine Gestik oder Bewegung einzelne Komponenten oder Ausschnitte des Systems fokussieren und somit diesen einzelnen Ausschnitt über den gesamten Wahrnehmungsraum ausgeben, wodurch eine.höhere Auflösung des angewählten Objekts ermöglicht ist. Durch die Verarbeitung der prozeßrelevanten Daten D ist es möglich, die Verarbeitung der im Wahrnehmungsraum vorgenommenen Manipulationen in Echtzeit durchzuführen, d. h. der Benutzer B kann durch Eingabe oder Anwahl einer Komponente, deren aktuellen Zustand im Prozeß abfragen oder durch ein entsprechendes Betätigen eines Schalthebels eine Steuerung in der Anlage vornehmen. Ferner umfaßt das System 1 einen Diagnosebaustein 22, dem die prozeßrelevanten Daten D der Speichereinheit 2 zugeführt werden. In dem Diagnosebaustein 22 werden die prozeßrelevanten Daten D für eine vorgegebene Diagnose, beispielsweise über eine bestimmte Komponente oder über einen bestimmten Prozeßzustand, regelbasiert und automatisch in Zustandsdaten Z umgewandelt, die die jeweilige Diagnose beschreiben. Diese Zustandsdaten Z werden ebenfalls dem Analysebaustein 6 zugeführt. Dazu wählt der Benutzer B eine Komponente aus, für die dann anhand der vom Diagnosemodul 22 erstellten Zustandsdaten Z eine Diagnose für die angewählte Komponente erstellt wird.

Darüber hinaus ist es möglich, Erzeugungen von verschiedenen Wahrnehmungsräumen nebeneinander darzustellen. Ferner ist es möglich, auch für geographisch getrennte Wahrnehmungsräume eine Kommunikation von in verschiedenen Wahrnehmungsräumen befindlichen Benutzern B aufzubauen. Dazu werden über die Datenleitung 12 der jeweils andere Benutzer B z.B. auf dem Projektor 14A projiziert und über eine Sprechverbindung dessen Kommentare hörbar gemacht. Eine Eingabe oder ein Eingriff des jeweils anderen Benutzers B in den Wahrnehmungsraum oder Interaktionsraum verändert diesen, was durch die zwischen den beiden Wahrnehmungsräumen vorgesehenen Kommunikationsleitungen übermittelt werden kann. Somit ändern sich zugleich beide Wahrnehmungsräume, obwohl sie an unterschiedlichen Orten aufgerufen worden sind. Dies verbessert in erheblichem Maße die Kommunikation auf große Entfernungen, wobei es sich nicht nur um einen verbalen Informationsaustausch, sondern vielmehr um den Austausch von veränderten Wahrnehmungsräumen handelt, wodurch Mißverständnisse sicher vermieden werden.

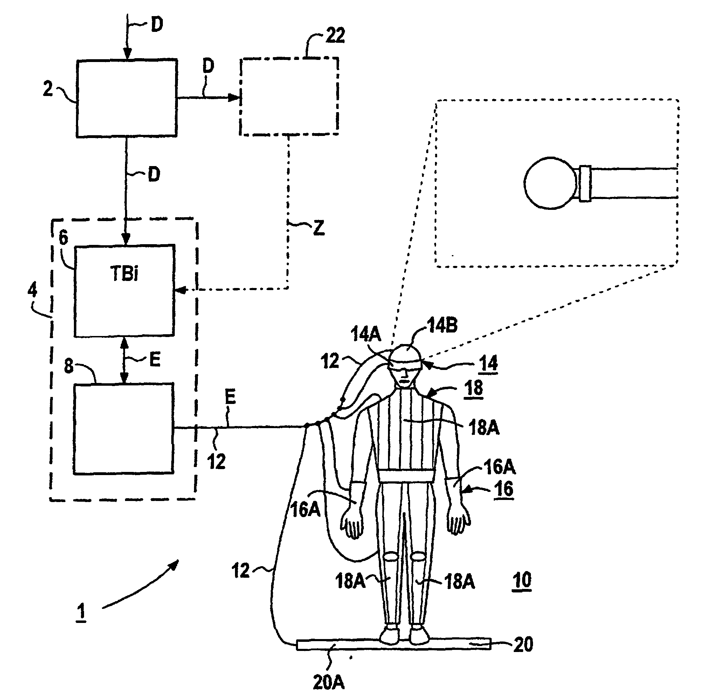

## Patentansprüche

1. System (1) zur Prozeßführung und -überwachung einer technischen Anlage mit einer Speichereinheit (2), einer Datenverarbeitungseinheit (4) und mit mindestens einem Mittel (10) zur Erzeugung eines virtuellen Wahrnehmungsraums sowie zur Generierung von Eingabedaten (E) für die Datenverarbeitungseinheit (4) durch Aktionen eines Benutzers im Wahrnehmungsraum, wobei das Mittel (10) zur Erzeugung und Generierung von Eingabedaten ein an die Blickrichtung und/oder Kopfbewegung gekoppeltes Visualisierungsgerät (14), sowie ein an die Handund/oder Fingerbewegung gekoppeltes erstes Eingabegerät (16) und/oder ein an die Körperbewegung gekoppeltes zweites Eingabegerät(18) und/oder ein an die Fußbewegung gekoppeltes drittes Eingabegerät (20) umfaßt.

2. System (1) nach Anspruch 1, bei dem das Mittel (10) zur Erzeugung und Generierung von Eingabedaten mittels eines zugehörigen Datenübertragungssystems (12) mit der Datenverarbeitungseinheit (4) verbunden ist.

3. System nach Anspruch 1 oder 2, bei dem die Datenverarbeitungseinheit (4) einen Analysebaustein (6) zur Auswahl eines Teilbildes aus einem als architektonisches Modell der technischen Anlage hinterlegten Gesamtbildes aufweist.

4. System (1) nach Anspruch 3, bei dem die Auswahl des Teilbildes (TBi) anhand der räumlichen Position des Benutzers (B) und/oder anhand der Gestik des Benutzers (B) und/oder anhand der Blickrichtung des Benutzers (B) und/oder anhand der Bewegung des Benutzers (B) erfolgt.

5. System (1) nach Anspruch 3 oder 4, bei dem das Visualisierungsgerät (14) eine Anzahl von Projektoren (14A) und/oder eine Anzahl von Detektoren (14B) zur Wiedergabe des Teilbilds (TBi) in räumlicher Form bzw. zur Detektion der räumlichen Position des Benutzers (B) im virtuellen Wahrnehmungsraum umfaßt, wobei mittels des Teilbilds (TBi) gemäß der Position und/oder der Blickrichtung des Benutzers (B) der entsprechende virtuelle Wahrnehmungsraum dargestellt ist.

6. System (1) nach einem der Ansprüche 1 bis 5, bei dem das erste Eingabegerät (16), das zweite Eingabegerät (18) und/oder das dritte Eingabegerät (20) jeweils eine Anzahl von zugehörigen Detektoren (16A, 18A) zur Detektion der räumlichen Position des Benutzers (B) im virtuellen Wahrnehmungsraum umfassen.

7. Verfahren zum Betrieb eines Systems (1) nach einem der Ansprüche 1 bis 6, bei dem mittels eines Visualisierungsgeräts (14) ein räumliches Bild erzeugt wird, welches die räumliche Position eines Benutzers (B) in einem virtuellen Wahrnehmungsraum darstellt, wobei durch Eingabe von Bewegungen des Benutzers (B) dessen räumliche Position im Wahrnehmungsraum ermittelt und an die ausgeführten Bewegungen angepaßt wird, und bei dem entsprechend den ausgeführten Bewegungen und der neu ermittelten Position das Bild bewegt bzw. der entsprechende Wahrnehmungsraum dargestellt wird.

## Claims

1. System (1) for process control and monitoring in a technical installation, with a memory unit (2), a data processing unit (4) and at least one means (10) for producing a virtual observation space and for generating input data (E) for the data processing unit (4) through actions of an operator in the observation space, the means (10) for producing and generating input data being a visualization device (14) coupled to the direction of view and/or head movement, as well as a first input device (16) coupled to the hand movement and/or finger movement and/or a second input device (18) coupled to the body movement and/or a third input device (20) coupled to the foot movement.

2. System (1) according to Claim 1, in which the means (10) for producing and generating input data is connected to the data processing unit (4) by means of an associated data transmission system (12).

3. System (1) according to Claim 1 or 2, in which the data processing unit (4) comprises an analysis module (6) for selecting a partial image from a total image stored as an architectural model of the technical installation.

4. System (1) according to Claim 3, in which the partial image (TBi) is selected on the basis of the spatial position of the operator (B) and/or the gestures of the operator (B) and/or the direction of view of the operator (B) and/or the movement of the operator (B).

5. System (1) according to Claim 3 or 4, in which the visualization device (14) comprises a number of projectors (14A) and/or a number of detectors (14B) for, respectively, displaying the partial image in spatial form and detecting the spatial position of the operator (B) in the virtual observation space, the corresponding virtual observation space being represented, by means of the partial image (TBi), according to the position and/or the direction of view of the operator (B).

6. System (1) according to any one of Claims 1 to 5, in which the first input device (16), the second input device (18) and/or the third input device (20) respectively comprise a number of associated detectors (16A, 18A) for detecting the spatial position of the operator (B) in the virtual observation space.

7. Method for operating a system (1) according to any one of Claims 1 to 6, in which there is produced by means of a visualization device (14) a spatial image which represents the spatial position of an operator (B) in a virtual observation space, movements of the operator (B) being input to determine the spatial position of the latter in the observation space and match it to the movements executed, and in which the image is moved and the corresponding observation space is represented according, respectively, to the movements executed and the newly determined position.

## Revendications

1. Système (1) pour conduire et pour surveiller un processus d'une installation technique, comprenant une unité de mémoire (2), une unité de traitement des données (4) et au moins un moyen (10) pour produire un espace d'observation virtuel ainsi que pour générer des données d'entrée (E) pour l'unité de traitement des données (4) par les actions d'un utilisateur dans l'espace d'observation, le moyen (10) pour produire et pour générer des données d'entrée comprenant un appareil de visualisation (14) associé à la direction du regard et/ou au mouvement de la tête, ainsi qu'un premier appareil d'entrée (16) associé au mouvement de la main et/ou des doigts et/ou un deuxième appareil d'entrée (18) associé au mouvement du corps et/ou un troisième appareil d'entrée (20) associé au mouvement du pied.

2. Système (1) selon la revendication 1 pour lequel le moyen (10) pour produire et pour générer des données d'entrée est lié à l'unité de traitement des données (4) au moyen d'un système de transmission de données (12) correspondant.

3. Système selon la revendication 1 ou 2 pour lequel l'unité de traitement des données (4) présente un module d'analyse (6) pour sélectionner une image partielle dans une image totale enregistrée en tant que modèle architectonique de l'installation technique.

4. Système (1) selon la revendication 3 pour lequel la sélection de l'image partielle (TBi) est réalisée à l'aide de la position de l'utilisateur (B) et/ou à l'aide de la gestuelle de l'utilisateur (B) et/ou à l'aide de la direction du regard de l'utilisateur (B) et/ou à l'aide du mouvement de l'utilisateur (B).

5. Système (1) selon la revendication 3 ou 4 pour lequel l'appareil de visualisation (14) comprend un certain nombre de projecteurs (14A) et/ou un certain nombre de détecteurs (14B) pour restituer l'image partielle sous forme spatiale ou pour détecter la position spatiale de l'utilisateur (B) dans l'espace d'observation virtuel, l'espace d'observation virtuel correspondant étant représenté au moyen de l'image partielle (TBi) selon la position et/ou la direction du regard de l'utilisateur (B).

6. Système (1) selon l'une des revendications 1 à 5 pour lequel le premier appareil d'entrée (16), le deuxième appareil d'entrée (18) et/ou le troisième appareil d'entrée (20) comprennent respectivement un certain nombre de détecteurs correspondants (16A, 16B) pour détecter la position spatiale de l'utilisateur (B) dans l'espace d'observation virtuel.

7. Procédé pour faire fonctionner un système (1) selon l'une des revendications 1 à 6 pour lequel on produit au moyen d'un appareil de visualisation (14) une image spatiale qui présente la position spatiale d'un utilisateur (B) dans un espace d'observation virtuel, par lequel grâce à l'entrée de mouvements de l'utilisateur (B) on obtient sa position spatiale dans l'espace d'observation et on l'ajuste aux mouvements réalisés et grâce auquel, de manière correspondante aux mouvements réalisés et à la nouvelle position obtenue, l'image bouge ou l'espace d'observation correspondant est représenté.
